# EUROPEAN PATENT SPECIFICATION

(11) **EP 1 785 248 B1**
(45) Date of publication and mention of the grant of the patent: **17.06.2009**
(21) Application number: 05742440.0
(22) Date of filing: 25.04.2005
(51) Int. Cl.: B29B 17/00, F23G 7/12, C10B 49/02

(54) **METHOD AND DEVICE FOR THERMALLY TREATING USED TIRES**
VERFAHREN UND VORRICHTUNG ZUR WÄRMEBEHANDLUNG VON GEBRAUCHTEN REIFEN
PROCEDE ET DISPOSITIF DE RETRAITEMENT THERMIQUE DE PNEUS USES

(30) Priority: 26.04.2004 RU 2004112896
(43) Date of publication of application: 16.05.2007
(73) Proprietor: Krivoruchko, Evgeny Petrovich, Omsk 644070 (RU)
(72) Inventor: ANTONENKO, Vladimir Fedorovich, Omsk, 644117 (RU); ANIKEEV, Valeryan Nikolaevich, Omsk, 644046 (RU)
(74) Representative: Milanov, Nina Vendela Maria
(86) International application number: PCT/RU2005/000223
(87) International publication number: WO 2005/102639

(56) References cited:
- EP-A1- 0 316 827
- WO-A-95/14562
- DE-A1- 3 820 913
- GB-A- 2 090 609
- RU-C1- 2 124 547
- RU-C1- 2 137 045
- RU-C1- 2 139 187
- US-A- 3 704 108
- US-A- 4 240 587
- US-A- 4 588 477
- US-A- 5 783 046
- US-B1- 6 271 427
- KAMINSKY W: "RECYCLING OF POLYMERIC MATERIALS BY PYROLYSIS" MAKROMOLEKULARE CHEMIE, MACROMOLECULAR SYMPOSIA, HUTHIG UND WEPF VERLAG. BASEL, CH, vol. 48 / 49, 1 August 1991 (1991-08-01), pages 381-393, XP000233398
- VESPER D E ET AL: "ROHSTOFFLICHE VERWERTUNG - EIEN UBERSICHT" KUNSTSTOFFE, CARL HANSER VERLAG, MUNCHEN, DE, vol. 83, no. 11, 1 November 1993 (1993-11-01), pages 905-909, XP000399974 ISSN: 0023-5563

## Description

### Field of the Invention

The invention relates to a method and a device for thermal processing worn tyres according to the preamble of claim 1 and to the preamble of claim 8 respectively.

### Background of the Invention

Patent US 5,087,436 (publ. 11.02.92) taught a method for processing the used tyres by the method of vacuum pyrolysis at 490-510°C and under absolute pressure of 5 kPa to produce carbon black, with absorption of iodine within the range 0.13-0.15 kg/kg, oil number according to DBF (80-100) of 10⁻⁵ m³/kg, and having dyeing capacity of 55-63.

GB Patent 1481352 (publ. 20.07.1977) taught a method for thermal processing of the worn tyres, comprising the steps of loading the tyres into a reactor, pyrolysis of a processed material, with subsequent separation of the pyrolysis products; and unloading of the solid residue. Pyrolysis is performed at temperature up to 1000°C in the medium of a reducing gas.

Both said methods have the common disadvantage of the necessity to use sophisticated apparatuses and consume large quantities of the energy needed to carry out their processes.

From Patent RU 2062284 (publ. 20.06.1996) known is a method for processing combustible waste materials, including the worn tyres or similar rubber waste, comprising the steps of: loading of a charge into a reactor, which charge at least partially consists of pieces of a combustible waste, so that to subject said waste to pyrolysis and gasification; establishing a gas flow through the loaded charge by way of supplying an oxygen-containing gasifying agent into the reactor, and removing the gaseous and liquid processing products from the reactor; maximum temperature in the reactor being maintained at 800-1700°C.

From Patent RU 2142357 (publ. 10.12.1999) known is a method for processing the worn tyres, comprising the steps of: thermal decomposition of tyres at 400-600°C to produce vapour-gaseous products and the solid carbon residue; cooling said products and residue to 40-50°C; and separation thereof into the liquid and vapour phases, and the solid carbon residue; the carbon residue being cooled by evaporation of the pyrolysis water, the gas ammonia being added into the cooling zone.

According to Patents RU 2062284 and 2142357, the worn tyres are processed in the media of an oxygen-containing gaseous agent delivered into the bed of a processed material, i.e. in the oxidizing gaseous medium, which teaching required an increased amount of the energy required for processing of a given material. Thus a gaseous agent according to RU 2142357 is obtained through simultaneous burning and gasification of the solid carbon residue of the processed tyre material (soot and coke); and according to RU 2062284 said agent is produced by burning the gases educed in the course of the thermal decomposition of the tyre material. The oxygen-containing gases can comprise the free oxygen, which in this case will constitute the oxidizing gaseous atmosphere (medium), and can comprise no free oxygen, consisting of H₂, CO, CH₄, which substances in this case will serve as the reducing gaseous medium.

The method known from Patent RU 2139187 (publ. 10.10.1999) and used for thermal processing of the worn tyres, discloses the comminuted tyres are loaded into a reactor, the processed material is subjected to pyrolysis at 550-800°C in the medium of a reducing gas; ratio of the reducing gas and the processed material being 0.20-0.45 : 1, with subsequent separation of the pyrolysis products so obtained. The reducing gas is produced using the method of incomplete combustion of hydrocarbons having α= 0.4-0.085; and when pyrolysis is completed, superheated steam, at 250-300°C and in quantity of 0.03-0.12 : 1, is fed to the loaded material.

Said method is performed in a device, comprising a reactor, a system for collecting the gases formed in the reactor; a reducing-gas generator connected to the reactor, a steam superheater, a hopper for delivery of the comminuted tyres into the reactor, and a receiving means that accommodates the solid residues left from thermal decomposition of products.

Said invention has the disadvantage of requiring large amounts of energy, because an external source of hydrocarbons is used for producing a reducing gas and steam.

GB 2 090 609, which is regarded as the closest prior art, relates to heat treatment systems for carbonaceous materials. A hot gas generator is used to supply a plurality of stages which are separately controlled by monitoring respective heat transfer systems. The controlling is preferably by mixing gas from the generator with recycled gas from downstream of the treatment stages.

US 4,588,477 discloses a method for travelling fluidized bed distillation of coarse ground tire scrap, rubber vulcanizate, in a mixture with coarse aggregate.

US 6,271,427 relates to a method for recovery of carbon and combinations of hydrocarbons from discarded tyres by pyrolysis.

US 4,240,587 discloses mobile processing plant and a method for processing scrap tires. The plant being operated on reusable by-products of pyrolytic reduction of the tires.

US 5,783,046 discloses a process and an apparatus for the destructive distillation of pyrolysis of used rubber tires t produce liquid and gaseous hydrocarbons and a solid carbonaceous char.

Kaminsky "Recycling of polymeric materials by pyrolysis", Die Makromolekulare Chemie, Macromolecular Symposia, Huthig und Wepf Verlag, Basel, CH, vol. 48/49, pages 381-393, discusses the recycling of plastics and rubbers by means of fluidized bed pyrolysis.

Vesper et al. "Rohstoffliche Verwertung - eine Übersicht", Kunststoffe, Carl Hansen Verlag, Munich, DE, vol. 83, no. 11, pages 905-909, discusses the use of discarded plastic products as replacement for fossil materials as secondary feedstocks.

EP 0 316 827 relates to recycling of process water in a fluidized bed pyrolysis reactor.

US 3,704,108 discloses converting particular rubber to hydrocarbon liquids and unchanged solids in a reactor.

WO 95/14562 relates to pyrolytically reprocessing solid industrial waste containing rubber, in particular used car tyres.

RU 2 137 045 discloses a method including heating fuel by mixing with high-temperature combustion products, after-burning of fines of hydrocarbon vapours in combustion zone.

RU 2 124 547 relates to pyrolytic processes used in forestry and agriculture to dispose biological waste.

DE 38 20 913 discloses a method of carbonising wood for the production of charcoal.

### Disclosure of the Invention

An objective of the present invention is to provide a method and a device for improving the processing of used tyres, making the processing more cost effective by improving the efficiency of the processing with lower energy requirements and by producing quality products that may be suitably used for recycling.

According to one aspect, the present invention relates to a method for thermal processing of worn tyres, comprising the step of pyrolysis of a material in the form of comminuted tyres in a reactor at a temperature of 550-800°C in a gas medium, a portion of which is obtained in a gas generator by combustion of gaseous pyrolysis products with vapours of liquid hydrocarbons, and separation of the pyrolysis products is carried out, the method being **characterized in that** the gas generator is a reducing gas generator, and in that pyrolysis is carried out in a reducing gas medium, a portion of the pyrolysis gaseous products emitted from the reactor with vapours of liquid hydrocarbons are fed to a heat-producing unit, wherein at least a portion of flue gases emitted from the heat-producing unit is fed to the reducing gas generator and the reactor.

Particular embodiments of the method according to the invention are the subject of the dependent claims 2 to 7.

The pyrolysis 15 preferably carried out at total ratio of the reducing gas and the processed material within the range of 0.8-0.12 : 1.

The flue gases are advantageously delivered directly into the reactor at the ratio of 0.25-0.50 : 1; temperature of the flue gases fed into the reactor is maintained within the preferable range of 120-180°C.

The material used for pyrolysis is preferably comminuted into pieces selected within the size range of 5-30 mm.

Prior to its loading into the reactor, the material advantageously is heated through by dint of the effluent flue gases.

The fraction of liquid hydrocarbons is further advantageously separated from the pyrolysis gaseous products.

According to an other aspect, the present invention relates to a device for thermal processing of worn tyres, including a reactor, an outlet system for gases formed in the reactor, a gas generator connected to the reactor, a system for feeding comminuted tyres into the reactor, and a receiving means for accommodating the pyrolysis solid residue. The device is **characterized in that** the gas generator is a reducing gas generator, and in that the device is provided with a heat-producing unit with flue gases intake means, the outlet system for gases formed in the reactor is connected to the heat-producing unit, wherein the flue gas intake means is connected to the reducing gas generator and to the reactor.

Particular embodiment of the device according to the invention are the subject of the dependent claims 9 to 12.

This device is advantageously supplemented with a system for educing the fraction of liquid hydrocarbons, which system is designed to be connected to the system for collecting the gases formed in the reactor.

The device preferably further includes a system for pre-heating of the comminuted tyres, which system is coupled to the flue gases removal means and to a means for releasing the flue gases into atmosphere. The device is preferably provided with means for monitoring temperature in reactor's pre-determined zones, and also with controllable means for performing a pre-set control of flow rate of the gases.

### Brief Description of Drawings

Advantages and features of the claimed invention will be apparent from the following detailed description to be read in conjunction with the accompanying drawing that schematically shows the claimed device.

### A Preferable Mode for Embodying the Invention

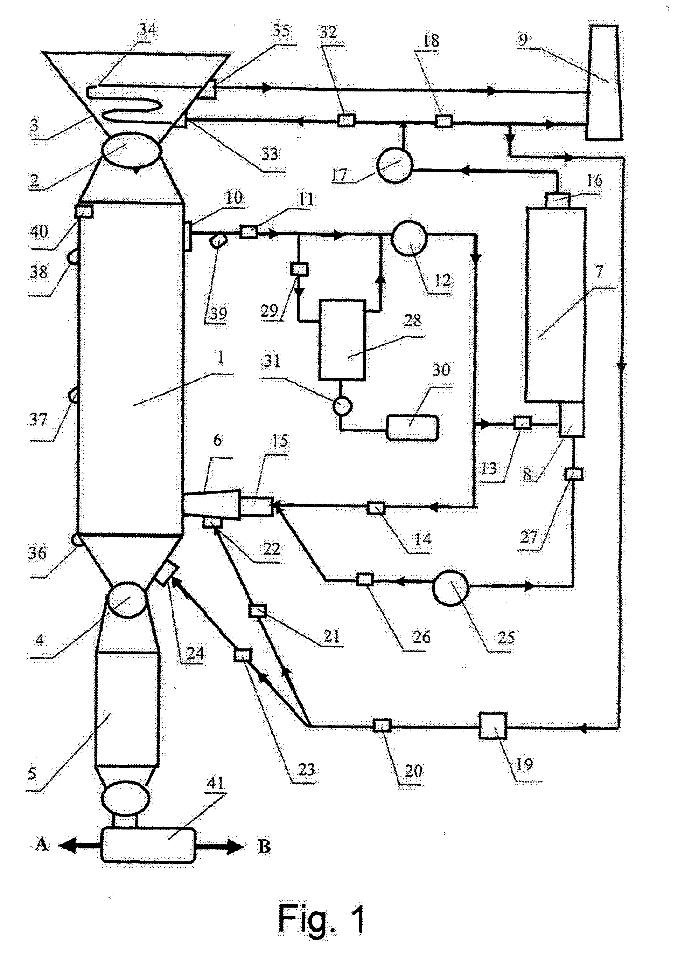

A device for thermal processing of the worn tyres and rubber articles, shown in Fig.1, comprises: a heat-insulated sealed reactor 1 coupled in its upper portion - via gated feeder 2 - to heated hopper 3 containing the comminuted tyres; receiving means 5 that - via gated feeder 4 - is coupled to reactor 1 and positioned in the lower portion of the reactor, and is adapted to accommodate the pyrolysis solid residue; reducing-gas generator 6 coupled to reactor 1; heat-producing unit 7 implemented as a boiler having burner device 8 and means 9 for releasing the flue gases into atmosphere.

Reactor 1 - via channel 10 for intake of the pyrolysis gases, which channel is provided in the lower portion of the reactor; and by flow governor 11, draught-inducing means 12 and flow governor 13, all connected in series to a gas conduit - is coupled to burner device 8 of heat-producing unit 7; and via channel 10 for intake of the pyrolysis gases, flow governor 11, draught-inducing means 12 and flow governor 14 said reactor is coupled to a burner device of reducing-gas generator 6 through its first inlet member 15.

By its flue gases intake channel 16 said heat-producing unit 7 - via draught-inducing means 17, flow governor 18, draught-inducing means 19, flow governor 20 and valve 21, all being connected into the gas conduit - is coupled to generator 6 through its second inlet member 22; and said unit - via draught-inducing means 17, valve 18, draught-inducing means 19, flow governor 20 and valve 23 - is coupled to the lower portion of reactor 1 using inlet channel 24. Flue gases intake channel 16 is coupled to means 9 for releasing the flue gases into atmosphere.

Reducing-gas generator 6 is designed to control temperature of the gases delivered into reactor 1 from said generator, such that said temperature will not exceed a pre-determined value.

To ensure stable burning, the device includes a loop to supply the atmosphere air by draught-inducing means 25 through valve 26 into the burner means of generator 6 using first inlet member 15; and - via valve 27 - into burner device 8 of heat-producing unit 7.

The device can further comprise a loop for educing the fraction of liquid hydrocarbons, which loop is implemented as condenser 28 that is connected to pyrolysis gases intake channel 10 through shut-off valve 29 and flow governor 11, and to liquid header 30 - by pump 31.

The device can be embodied with a pre-heating loop for pre-heating of the comminuted tyres in hopper 3 by the flue gases delivered from flue gases intake channel 16 of heat-producing unit 7 by draught-inducing means 17 through valve 32 and inlet manifold 33 of heating means 34 (coil pipe) in hopper 3, from which heating means said gases are removed through manifold 35 into flue gases releasing means 9.

Valves and flow governors provided in the connection lines of their respective loops are the controllable ones, and can be operated both manually and/or by an electric drive to maintain required temperatures of gas flows, which circumstance allows render the device automatic.

A fan, smoke exhauster, compressor or ejector can be suitably used as a draught-inducing means.

The course of the process is monitored and controlled using temperature control means. Temperature sensor 36 is intended to monitor temperature in the reactor zone between inlet channel 24, wherethrough the flue gases are inputted, and the inlet channel of generator 6 leading into reactor 1. The pyrolysis zone is monitored by sensor 37 disposed near the pyrolysis lower zone, and by sensor 38 disposed near the upper pyrolysis zone.

Exiting of the pyrolysis gaseous products is monitored by sensor 39 positioned near pyrolysis gases intake channel 10. The reactor has also level gauge 40.

Receiving means 5 to accommodate the pyrolysis solid residue is coupled to magnetic separator 41 for separating the pyrolysis solid residue into a metallic component that is withdrawn (shown by arrow A), and into the carbon residue to be packed (shown by arrow B).

The claimed device operates, and the claimed process of thermal decomposition of the worn tyres is carried out as follows.

The comminuted worn tyres or used rubber articles are fed into hopper 3. Before its initial start-up, reactor's 1 lower portion is filled with a solid carbonaceous material (non-used soot). The comminuted tyres deposed in hopper 3 are heated through by the gases produced by an auxiliary back-up fuel, and temperature in reactor 1 is increased by supplying, via first inlet member 15, the back-up fuel to the burner device of generator 6 through first inlet member 15. Once the operation temperature has been reached (the pyrolysis temperature), the back-up fuel supply is terminated, and the continuous pyrolysis process proceeds, the pyrolysis gases being delivered into generator 6.

The comminuted rubber tyres from hopper 3 - via feeder 2 - enter reactor 1. The reactor's lower portion is supplied with the reducing gas from generator 6 at 550-880°C, in quantity of 0.45-0.70 : 1.

The reducing gaseous medium is the medium that has H₂, CO, CH₄ among its constituents, and does not comprise free oxygen.

Limits of mass ratio of the reducing gas and the loaded crumb have been determined experimentally, basing on values of the surface area of a processed material and rate of processing thereof.

Hydrogen and unsaturated hydrocarbons contained in the reducing gas, at temperature over 500°C, react with the hydrocarbon compounds existing on the rubber crumb surface, thereby producing vapours of C₅-C₁₄ hydrocarbon compounds. These vapours, mingled with the reducing gas at 220-250°C, are withdrawn from the upper portion of reactor 1, and by draught-inducing means 8 they are delivered for combustion into burner device 8 of heat-producing unit 7 and into generator 6 of the reducing gas through its first inlet member 15 in quantity of 0.1-0.2 of the pyrolysis gases' part.

A portion of the hydrocarbon vapours withdrawn from channel 10, by operation of shut-off valve 29, can be directed to condenser 28, wherein the pyrolysis gases vapours are condensed; and the pyrolysis liquid will enter liquid header 30. After said condenser, the mix of gases and non-condensed vapours of hydrocarbons is delivered either for combustion through flow governor 13 into heat-producing unit 7, or, through flow governor 14, into the burner device of the reducing-gases generator through first inlet member 15.

The flue gases, using draught-inducing means 17, are delivered - via valve 21 - into reducing-gases generator 6 through its second inlet member 22 so that to provide the required temperature limits of 500-800°C; and upon completion of the pyrolysis: they are supplied - via valve 23 - into the zone of cooling and processing of the solid residue in the reactor's 1 lower portion. Total quantity of the flue gases that are fed into the reactor is 0.25 - 0.50 : 1 with respect to the processed material.

The gases at 120-180°C comprise water vapours in quantity of 8-10%, and oxygen in quantity of 4-7%.

The water vapours and oxygen, being heated by the heat they receive from the solid products, react with the hydrocarbons remaining on their surface according to these known reactions:

CₙHₘ + O₂ = CO + H₂O +H₂ +CO₂

CₙHₘ + HO₂ = H₂ + CO +CO₂

and they form an additional volume of the reducing gas, which gas enters the reactor's 1 reaction zone. Total quantity of the reducing gas supplied from generator 6 and from the solid residue cooling and processing zone is 0.7-1.1 : 2 with respect to a processed material.

The solid products comprising the carbon residue (soot, metal, mineral constituents of rubber mixes) and having been cooled by the flue gases, are removed through feeder 4 into cooled receiving means 5 for accommodating the solid products; and separator 41 separates the residue into the carbon residue and a metal.

Output capacity of the liquid-educing device depends on a mode of operation of the heat-producing unit, and is controlled (e.g. its capacity is increased or decreased depending on a season).

### Example

The comminuted tyres (5-30 mm), that were pre-heated in hopper 3, are heated by a reducing gas, ratio of said gas and a processed material being 0.5:1, at 650°C; said gas being obtained from generator 6 at α=0.7 by combustion of 0.15 of the pyrolysis products' part. Processing time period is 22 minutes. Once pyrolysis has been completed, the flue gases at 140°C from heat-producing unit 7, at ratio of 0.3 with respect to the loaded material, are supplied into the reactor's lower portion.

This pyrolysis produces 68% of the gaseous and vapour hydrocarbons, and 32% of the solid residue of the loaded material weight. Yield of the liquid phase from the gaseous and vapour hydrocarbons is 59.5%. Density of the liquid so produced is d₄²⁰ g/cm² - 0.92; kinematic viscosity C_{St} - 5.5, temperature of inflammation in open crucible, °C - 94.

After separation of the solid residue into carbon and metal, the produced carbon has the following indices, according to ASTM: iodine number, ml/100 g - 112; outer surface, STAB - 110; light transmission through toluene extract, % - 98; DBF adsorption, ml/100 g - 93.

Findings of the conducted experiments are summarized in Table 1.

**Table 1**

| | Indices | Prototype | Example 1 | Example 2 | Example 3 |
|---|---|---|---|---|---|
| 1. | Temperature of pyrolysis, °C | 650 | 400 | 650 | 870 |
| 2. | Quantity of the pyrolysis products fed into the generator, a part of the material mass | 0.3 | 0.08 | 0.15 | 0.27 |
| 3. | Yield of gaseous phase, % | | 4.3 | 8.5 | 21.5 |
| 4. | Yield of carbon residue, % | *35 | 34.2 | 32 | 28 |
| 4.1 | Iodine number of the carbon residue, g/kg | 120 | 36 | 112 | 125 |
| 4.2 | Light transmission through toluene extract, % | 93 | 19 | 98 | 99.5 |
| 5. | Yield of liquid phase, % | | 61.5 | 59.5 | 51 |
| 5.1. | Density of liquid d₄²⁰, g/cm² | | 0.87 | 0.92 | 0.97 |
| 5.2 | Kinematic viscosity, C_{St} | | 2.9 | 5.5 | 7.2 |
| 5.3. | Temperature of inflammation in open crucible, °C | | 82 | 94 | 158 |

| | | | | | |
|---|---|---|---|---|---|
| * total yield of gaseous and vapour hydrocarbons 65% | | | | | |

The Table shows that at low temperatures of the pyrolysis, the solid carbon residue (soot) has low physical-chemical indices and is not suitable for further use thereof, or needs subsequent processing. At high temperatures of the pyrolysis, yield of the gaseous hydrocarbons is enhanced, and density of the liquid phase grows, which indicates an high content of heavy hydrocarbons, hence - further processing (and application) becomes significantly more difficult.

### Industrial Applicability

The claimed method for utilizing tyres and rubber articles is the environmentally-friendly and cost-effective method for generation of energy, and in comparison with the most pertinent art allows obviate the process step of feeding of superheated steam, which in the claimed method is replaced with feeding of flue gases; further, this method uses the pyrolysis products (gases) instead of a hydrocarbon gas for obtaining the reducing gas, except for the step of start-up of the device.

## Claims

1. A method for thermal processing of worn tyres, comprising the step of pyrolysis of a material in the form of comminuted tyres in a reactor (1) at a temperature of 550-800°C in a gas medium, a portion of which is obtained in a gas generator by combustion of gaseous pyrolysis products with vapours of liquid hydrocarbons, and separation of the pyrolysis products is carried out,
**characterized in that** the gas generator is a reducing gas generator (6), and **in that** pyrolysis is carried out in a reducing gas medium, a portion of the pyrolysis gaseous products emitted from the reactor (1) with vapours of liquid hydrocarbons are fed to a heat-producing unit (7), wherein at least a portion of flue gases emitted from the heat-producing unit (7) is fed to the reducing gas generator (6) and the reactor (1).

2. The method for thermal treating of worn tyres as claimed in claim 1, **characterised in that** the pyrolysis is carried out at total mass ratio of the reducing gas to the material being within the range of 0.8-1.1 : 1.

3. The method for thermal treating of worn tyres as claimed in claim 1, **characterised in that** the flue gases are fed into the reactor at 120-180°C.

4. The method for thermal treating of worn tyres as claimed in claim 1, **characterised in that** the mass ratio of said portion of the flue gases to the material is 0.25-0.50 : 1.

5. The method for thermal treating of worn tyres as claimed in claim 1, **characterised in that** used is the material comminuted into pieces sized within the range of 5-30 mm.

6. The method for thermal treating of worn tyres as claimed in claim 1, **characterised in that**, said material - before being loaded into the reactor - is heated by the effluent flue gases.

7. The method for thermal treating of worn tyres as claimed in claim 1, **characterised in that** it further comprises the step of separating the fraction of liquid hydrocarbons from said pyrolysis gaseous products.

8. A device for thermal processing of worn tyres, including
a reactor (1),
an outlet system (10) for gases formed in the reactor,
a gas generator connected to the reactor (1),
a system (2,3) for feeding comminuted tyres into the reactor (1), and
a receiving means (5) for accommodating the pyrolysis solid residue ;
**characterized in that** the gas generator is a reducing gas generator (6), and **in that** the device is provided with a heat-producing unit (7) with flue gases intake means (16), the outlet system (10) for gases formed in the reactor is connected to the heat-producing unit (7), wherein the flue gas intake means (16) is connected to the reducing gas generator (6) and to the reactor (1).

9. The device for thermal processing of worn tyres according to claim 8, **characterised in that** the device further comprises a system (28) for educing the fraction of liquid hydrocarbons, which system (28) is designed to be connected to the outlet system (10) for the gases formed in the reactor (1).

10. The device for thermal processing of worn tyres according to claim 8, **characterised in that** it further comprises a system (34) for pre-heating said material disposed in said feeding system (2,3), which pre-heating system (34) is coupled to the flue gases intake means (16).

11. The device for thermal processing of worn tyres according to claim 8, **characterised in that** it is provided with means (36,37,38) for monitoring temperature of predetermined zones of the reactor (1).

12. The device for thermal processing of worn tyres according to claim 8, **characterised in that** it is provided with means (11,13,14,18,20) for controlling gas flow rate.

## Patentansprüche

1. Verfahren zur thermischen Verarbeitung abgefahrener Reifen, umfassend die Pyrolysestufe eines Materials in Form der zerkleinerten Reifen in einem Reaktor (1) bei der Temperatur von 550 bis 800° C im Gasmedium, dessen Teil in einem Gaserzeuger durch die Verbrennung gasförmiger Pyroliseprodukte mit Dämpfen flüssiger Kohlenwasserstoffe erzeugt ist, und die Trennung der Pyroliseprodukte erfolgt, **dadurch gekennzeichnet, daß** der Gaserzeuger ein reduzierender Gaserzeuger (6) ist und die Pyrolise im reduzierenden Gasmedium erfolgt, ein Teil der aus dem Reaktor (1) ausströmenden gasförmigen Pyroliseprodukte mit den Dämpfen der flüssigen Kohlenwasserstoffe einem Wärmeerzeugungsaggregat (7) zugeführt wird, in dem zumindest ein Teil der aus dem Wärmeerzeugungsaggregat (7) ausströmenden Rauchgase dem reduzierenden Gaserzeuger (6) und dem Reaktor (1) zugeführt wird.

2. Verfahren zur thermischen Verarbeitung abgefahrener Reifen nach Anspruch 1, **dadurch gekennzeichnet, daß** die Pyrolise bei dem allgemeinen Massenverhältnis: reduzierendes Gas-Material im Bereich von 0,8-1,1:1 erfolgt.

3. Verfahren zur thermischen Verarbeitung abgefahrener Reifen nach Anspruch 1, **dadurch gekennzeichnet, daß** die Rauchgase dem Reaktor bei der Temperatur von 120 bis 180° C zugeführt werden.

4. Verfahren zur thermischen Verarbeitung abgefahrener Reifen nach Anspruch 1, **dadurch gekennzeichnet, daß** das Massenverhältnis: der genannte Teil der Rauchgase-das Material 0,25-0,50:1 ist.

5. Verfahren zur thermischen Verarbeitung abgefahrener Reifen nach Anspruch 1, **dadurch gekennzeichnet, daß** das Material verwendet wird, das in Stücke zerkleinert ist, denen Größen aus dem Bereich von 50-30 mm gewählt sind.

6. Verfahren zur thermischen Verarbeitung abgefahrener Reifen nach Anspruch 1, **dadurch gekennzeichnet, daß** das erwähnte Material vor dem Einlegen in den Reaktor mit den ausströmenden Rauchgasen durchgewärmt wird.

7. Verfahren zur thermischen Verarbeitung abgefahrener Reifen nach Anspruch 1, **dadurch gekennzeichnet, daß** zusätzlich das Ausscheiden einer Fraktion der flüssigen Kohlenwasserstoffe aus den erwähnten gasförmigen Pyroliseprodukten durchgeführt wird.

8. Vorrichtung zur thermischen Verarbeitung abgefahrener Reifen, umfassend einen Reaktor (1), ein System (10) für die Ableitung der im Reaktor erzeugenden Gase, einen an den Reaktor (1) angeschlossenen Gaserzeuger, ein System (2, 3) für die Zuführung der zerkleinerten Reifen dem Reaktor (1) und ein Aufnahmemittel (5) zur Aufnahme eines festen Pyroliserestes, **dadurch gekennzeichet, daß** der Gaserzeuger ein reduzierender Gaserzeuger (6) ist, und die Vorrichtung mit einem Wärmeerzeugungsaggregat (7) mit einem Entnahmemittel (16) zur Entnahme der Rauchgase versehen ist, das System (10) für die Ableitung der im Reaktor erzeugenden Gase mit dem Wärmeerzeugungsaggregat (7) verbunden ist, dabei ist das Entnahmemittel (16) zur Entnahme der Rauchgase mit dem reduzierenden Gasgenerator und dem Reaktor (1) verbunden.

9. Vorrichtung zur thermischen Verarbeitung abgefahrener Reifen nach Anspruch 8, **dadurch gekennzeichnet, daß** sie zusätzlich ein System (28) für die Ausscheidung einer Fraktion der flüssigen Kohlenwasserstoffe enthält, wo das System (28) derart eingebaut ist, daß dieses ans System (10) für die Ableitung der im Reaktor (1) erzeugenden Gase angeschlossen werden kann.

10. Vorrichtung zur thermischen Verarbeitung abgefahrener Reifen nach Anspruch 8, **dadurch gekennzeichnet, daß** sie zusätzlich ein System (34) für die Vorerwärmung des erwähnten Materials enthält, das sich im erwähnten System (2, 3) befindet, wobei das System (34) für die Vorerwärmung mit dem Entnahmemittel (16) zur Entnahme der Rauchgase verbunden ist.

11. Vorrichtung zur thermischen Verarbeitung abgefahrener Reifen nach Anspruch 8, **dadurch gekennzeichnet, daß** sie mit Mitteln (36, 37, 38) zum Temperaturmonitoring der vorgegebenen Bereiche des Reaktors (1) versehen ist.

12. Vorrichtung zur thermischen Verarbeitung abgefahrener Reifen nach Anspruch 8, **dadurch gekennzeichnet, daß** sie mit Mitteln (11, 13, 14, 18, 20) zur Einstellung des Gasdurchsatzes versehen ist.

## Revendications

1. Procédé de transformation thermique des pneux usés, comprenant l'étape de pyrolyse de la matière sous la forme des pneux broyés dans un réacteur (1) à une température entre 550 et 800°C dans un milieu gazeux dont une partie est obtenue dans un générateur de gaz par la combustion des produits de pyrolyse gazeux avec des vapeurs d'hydrocarbures liquides, et on effectue la séparation des produits de pyrolyse, **caractérisé en ce que** le générateur de gaz est un générateur (6) de gaz réducteur et la pyrolyse est réalisée dans un milieu de gaz réducteur, une partie des poduits de pyrolyse gazeux sortant du réacteur (1) étant dirigée dans une unité (7) de production de chaleur dans laquelle au moins une partie des gaz de fumées sortant de l'unité (7) de production de chaleur est envoyée dans le générateur (6) de gaz réducteur et dans le réacteur (1).

2. Procédé de transformation thermique des pneux usés selon la revendication 1, **caractérisé en ce que** la pyrolyse est effectuée selon le rapport massique total entre le gaz réducteur et la matière dans l'intervalle de 0,8 à 1,1:1.

3. Procédé de transformation thermique des pneux usés selon la revendication 1, **caractérisé en ce que** les gaz de fumées sont introduits dans le réacteur à une température comprise entre 120 et 180°C.

4. Procédé de transformation thermique des pneux usés selon la revendication 1, **caractérisé en ce que** le rapport massique entre ladite partie des gaz de fumées et la matière est compris entre 0,25 et 0,50:1.

5. Procédé de transformation thermique des pneux usés selon la revendication 1, **caractérisé en ce que** l'on utilise la matière réduite aux morceux dont la taille est choisie entre 5 et 30 mm.

6. Procédé de transformation thermique des pneux usés selon la revendication 1, **caractérisé en ce qu'**avant d'être chargée dans le réacteur ladite matière est réchauffée par les gaz de fumées évacués.

7. Procédé de transformation thermique des pneux usés selon la revendication 1, **caractérisé en ce que** l'on effectue en outre la séparation de la fraction d'hydrocarbures liquides à partir desdits produits de pyrolyse gazeux.

8. Dispositif pour la transformation thermique des pneux usés, comprenant un réacteur (1), un système (10) d'évacuation de gaz formés dans le réacteur, un générateur de gaz relié au réacteur (1), un système (2, 3) d'introduction de pneux broyés dans le réacteur, et un moyen (5) de réception de résidus de pyrolyse solides,
**caractérisé en ce que** le générateur de gaz est un générateur de gaz réducteur, et le dispositif est équipé d'une unite (7) de production de chaleur avec un moyen (16) de prélèvement de gaz de fumées, le système (10) d'évacuation de gaz formés dans le réacteur étant relié à l'unité (7)de production de chaleur, le moyen (16) de prélèvement de gaz de fumées étant relié au générateur (6) de gaz réducteur et au réacteur (1).

9. Dispositif pour la transformation thermique des pneux usés selon la revendication 8, **caractérisé en ce qu'**il comporte en outre un système (28) de séparation de la fraction d'hydrocarbures liquides, le système (28) étant monté de manière à être relié au système (10) d'évacuation de gaz formés dans le réacteur (1).

10. Dispositif pour la transformation thermique des pneux usés selon la revendication 8, **caractérisé en ce qu'**il comporte en outre un système (34) de préchauffage de ladite matière se trouvant dans ledit système (2, 3) d'introduction, le système (34) de préchauffage étant relié au moyen (16) de prélèvement de gaz de fumées.

11. Dispositif pour la transformation thermique des pneux usés selon la revendication 8, **caractérisé en ce qu'**il est équipè de moyens (36, 37, 38) de suivi de la température des zones données du réacteur (1).

12. Dispositif pour la transformation thermique des pneux usés selon la revendication 8, **caractérisé en ce qu'**il est équipé de moyens (11, 13, 14, 18, 20) de régulation de débit de gaz.
